# FASCICULE DE BREVET EUROPEEN

(11) **EP 3 898 385 B1**
(45) Date de publication et mention de la délivrance du brevet: **12.11.2025**
(21) Numéro de dépôt: 19842370.9
(22) Date de dépôt: 22.11.2019
(51) Int. Cl.: B62D 25/02, B62D 25/08

(54) **VÉHICULE AVEC STRUCTURE RENFORCÉE POUR LIMITATION DES EFFORTS DE RETENUE EN CAS DE CHOC FRONTAL**
FAHRZEUG MIT VERSTÄRKTER STRUKTUR ZUR BEGRENZUNG DER HALTEKRÄFTE BEI EINEM FRONTALAUFPRALL
VEHICLE WITH REINFORCED STRUCTURE FOR LIMITING RETAINING FORCES IN THE EVENT OF A FRONTAL IMPACT

(30) Priorité: 20.12.2018 FR 1873617
(43) Date de publication de la demande: 27.10.2021
(73) Titulaire: Stellantis Auto SAS, 78300 Poissy (FR)
(72) Inventeur: BENANE, Said, 94240 L HAY LES ROSES (FR)
(74) Mandataire: BCIP
(86) Numéro de dépôt international: PCT/FR2019/052785
(87) Numéro de publication internationale: WO 2020/128177

(56) Documents cités:
- CN-A- 102 632 927
- FR-A1- 2 985 711
- JP-A- 2013 082 372
- US-A- 4 973 103
- US-A1- 2018 244 318

## Description

La présente invention revendique la priorité de la demande française 1873617 déposée le 20 décembre 2018.

L'invention concerne un véhicule de type automobile comprenant une structure latérale arrière sur laquelle est fixée, du côté habitacle du véhicule, un support pour des systèmes de retenue comme par exemple un système de verrouillage de dossier de siège ou un enrouleur de ceinture de sécurité.

Dans le cas d'une collision frontale, les passagers situés à l'arrière du véhicule sont retenus sur leurs sièges au moyen de ceintures de sécurité. Les charges placées dans le coffre sont arrêtées par le dossier de la banquette arrière. Lorsque la banquette est rabattable, cette dernière est verrouillée en partie haute, de chaque côté, par des moyens de verrouillage fixés sur les éléments de structure latéraux arrière du véhicule. Les enrouleurs de ceinture de sécurité sont portés par une tablette de dossier également fixée sur un élément de structure latérale arrière telle que, par exemple, la doublure de pied arrière. La tablette de dossier peut ainsi être soumise à un effort de traction en direction de l'avant du véhicule pouvant aller jusqu'à 1,5 tonnes. Cet effort se transmet à la doublure de pied arrière sur laquelle la tablette de dossier est fixée. La doublure de pied arrière doit donc se montrer suffisamment résistante pour faire face aux efforts mis en jeu.

La recherche constante d'un allègement de la masse globale des véhicules en vue de diminuer les émissions de gaz carbonique à effet de serre peut parfois impliquer la recherche d'une diminution de la masse de la structure du véhicule. Cet allègement de la structure de caisse ne doit néanmoins pas se faire au détriment des prestations de sécurité pour les passagers du véhicule. Il existe donc un besoin de solutions permettant de diminuer la masse d'un véhicule, et notamment de la structure de caisse d'un véhicule tout en garantissant les prestations de ce véhicule en matière de sécurité.

Le document US2018/244318 décrit une structure latérale arrière de véhicule comprenant un pied arrière et un passage de roue. Ladite structure comprend en outre un renforcement de boîtier de suspension qui interconnecte le pied arrière avec le passage de roue arrière selon la direction verticale. L'agencement décrit a pour objectif de renforcer la structure contre les déformations verticales résultant de collisions à l'arrière du véhicule.

Le document CN206734419U décrit une structure de véhicule dans laquelle la structure latérale est reliée au passage de roue au moyen de différents éléments de renforcement.

Les structures proposées par ces documents sont intéressantes mais ne répondent pas à la problématique de renforcement de la structure en cas de collision frontale entraînant des efforts importants en traction en direction de l'avant du véhicule par l'intermédiaire de supports pour des systèmes de retenue.

L'invention a pour objectif de répondre à au moins un des problèmes et inconvénients rencontrés dans l'art antérieur. En particulier, l'invention a pour objectif d'améliorer les prestations de la structure latérale arrière d'un véhicule en matière de résistance aux efforts de retenue dirigés vers l'avant du véhicule issus des moyens de verrouillage du dossier de la banquette arrière et/ou des enrouleurs de ceinture de sécurité en cas de collision frontale.

A cet effet et selon un premier aspect, l'invention a pour objet un véhicule automobile comprenant une doublure de pied arrière et un passage de roue arrière, et au moins un support de système de retenue fixé sur la doublure de pied arrière, le véhicule est remarquable en ce qu'il comprend en outre un renfort montrant deux ailes latérales, ledit renfort étant fixé par ses ailes latérales à la doublure de pied arrière et au passage de roue arrière et en ce que ledit renfort est disposé sur la doublure de pied arrière au moins en partie à la même hauteur que le ou un des supports de système de retenue. Le renfort est agencé dans le véhicule de manière à ce qu'une de ses ailes latérales soit disposée en avant de l'autre de sorte à définir une aile latérale avant et une aile latérale arrière, et ledit renfort est fixé au passage de roue arrière par son aile latérale avant. De préférence, l'aile latérale avant du renfort est fixée sur le passage de roue arrière et l'aile latérale arrière est fixée sur la doublure de pied arrière. La doublure de pied arrière présente un ajour en avant de la zone de fixation du support de système de retenue et ledit renfort est fixé en bordure dudit ajour de manière à ce que sa zone de fixation soit intercalée entre ledit ajour et la zone de fixation du support de système de retenue selon la direction longitudinale du véhicule.

Comme on l'aura compris à la lecture de la définition qui vient d'en être donnée, l'invention consiste à transmettre au passage de roue arrière une partie des efforts de retenue exercés sur la doublure de pied arrière au moyen d'une pièce formant un renfort. La transmission d'une partie des efforts permet de limiter l'effort auquel est soumis la doublure de pied arrière. La prestation en matière de sécurité est ainsi maintenue, voire améliorée. Le positionnement du renfort à la même hauteur que la tablette permet d'optimiser cette transmission d'effort et d'éviter ou du moins de limiter le risque de déformation de la doublure de pied arrière lorsqu'elle est soumise à des efforts de retenue importants.

Selon un mode de réalisation préféré, le renfort se présente sous forme d'un embouti plié de manière à ce que ses ailes latérales soient non-parallèles entre elles.

De préférence, le renfort présente en outre un corps agencé entre les ailes latérales et ledit corps s'étend entre les ailes latérales selon un profil arqué.

Alternativement, le renfort présente en outre un corps agencé entre les ailes latérales et se présente sous forme d'équerre à trois pans.

Selon un autre mode de réalisation non couvert par les revendications, la doublure de pied arrière montrant une face intérieure et une face extérieure, le support de système de retenue (telle que la tablette de dossier) étant fixé sur la face intérieure de la doublure de pied arrière, le véhicule est remarquable en ce que le renfort est fixé sur la face extérieure de la doublure de pied arrière.

Selon un autre mode de réalisation non couvert par les revendications, le renfort étant fixé au passage de roue arrière par son aile latérale avant, le véhicule est remarquable en ce que le renfort est fixé sur une partie dudit passage de roue arrière agencée pour s'étendre selon la direction transversale dudit véhicule.

Selon un autre mode de réalisation non couvert par les revendications, au moins une aile latérale s'étend selon la direction verticale, plus préférentiellement, les deux ailes latérales avant et arrière s'étendent selon la direction verticale.

Selon un mode de réalisation préféré, le renfort est fixé sur la doublure de pied arrière sur une zone disposée en avant de la zone de fixation du support de système de retenue selon la direction longitudinale du véhicule.

Par exemple, le système de retenue comprenant une tablette de dossier, le renfort est fixé sur la doublure de pied arrière sur une zone disposée en avant de la zone de fixation de la tablette de dossier selon la direction longitudinale du véhicule.

Par exemple, la doublure de pied arrière présente un ajour en avant de la zone de fixation d'une tablette de dossier et ledit renfort est fixé en bordure dudit ajour de manière à ce que sa zone de fixation soit intercalée entre ledit ajour et la zone de fixation de la tablette de dossier selon la direction longitudinale du véhicule.

Optionnellement, le renfort présente au moins une nervure de rigidification sur au moins une de ses ailes latérales et/ou sur son corps, lorsque le renfort présente en outre un corps agencé entre les ailes latérales.

Avantageusement, le renfort est en acier et est assemblé par soudage.

Selon un deuxième aspect, non couvert par les revendications, renfort est destiné à être fixé à la doublure de pied arrière et au passage de roue arrière, le renfort étant remarquable en ce qu'il comprend deux ailes latérales, se présente sous forme d'un embouti plié de manière à ce que ses ailes latérales soient non-parallèles entre elles, en ce qu'il présente en outre un corps agencé entre les ailes latérales et en ce que ledit corps s'étend entre les ailes latérales selon un profil arqué.

L'invention sera bien comprise et d'autres aspects et avantages apparaîtront clairement à la lecture de la description qui suit donnée en référence aux planches de dessins annexées sur lesquelles :
[Fig. 1] La figure 1 est une vue partielle de la structure de caisse d'un véhicule selon l'invention telle que vue depuis l'habitacle du véhicule.
[Fig. 2] La figure 2 est une représentation d'un renfort selon l'invention.
[Fig. 3] La figure 3 est une vue en coupe selon un plan horizontal A-A du renfort illustré en figure 2.
[Fig. 4] La figure 4 est une vue partielle montrant l'agencement d'un ensemble selon l'invention comprenant une doublure de pied arrière, un passage de roue arrière, une tablette de dossier et un renfort.
[Fig. 5] La figure 5 est une vue partielle montrant l'agencement d'un ensemble selon l'invention comprenant une doublure de pied arrière, un passage de roue arrière et un renfort selon un angle de vue différent.

Dans la description qui suit le terme « comprendre » est synonyme de « inclure et n'est pas limitatif en ce qu'il autorise la présence d'autres éléments dans le véhicule ou le renfort auquel il se rapporte. Il est entendu que le terme « comprendre » inclut les termes « consister en ». « Avant » et « arrière » s'entendront selon la direction longitudinale du véhicule tel qu'orienté selon son sens normal de marche. Sur les différentes figures, les mêmes références désignent des éléments identiques ou similaires.

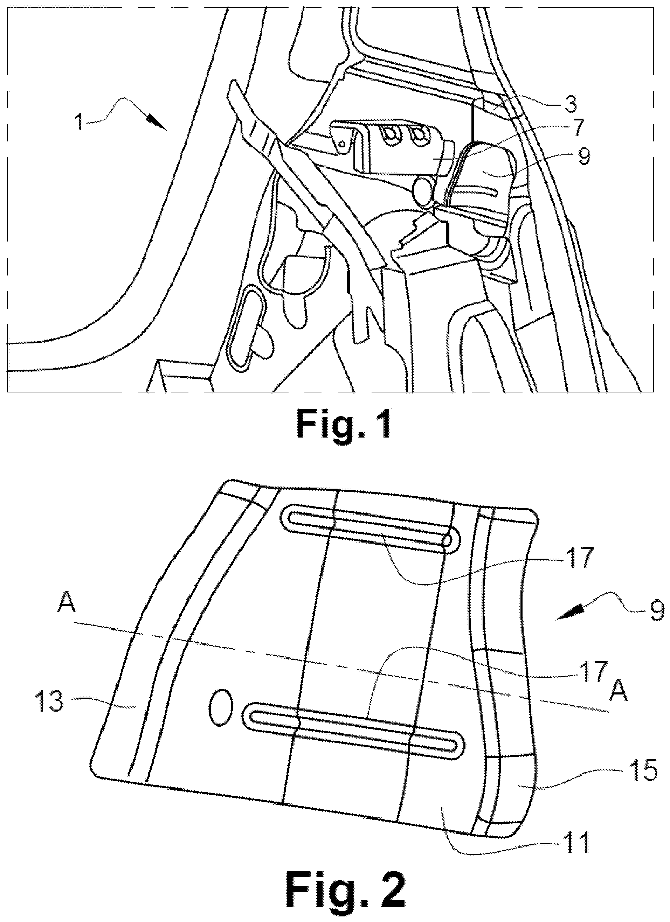

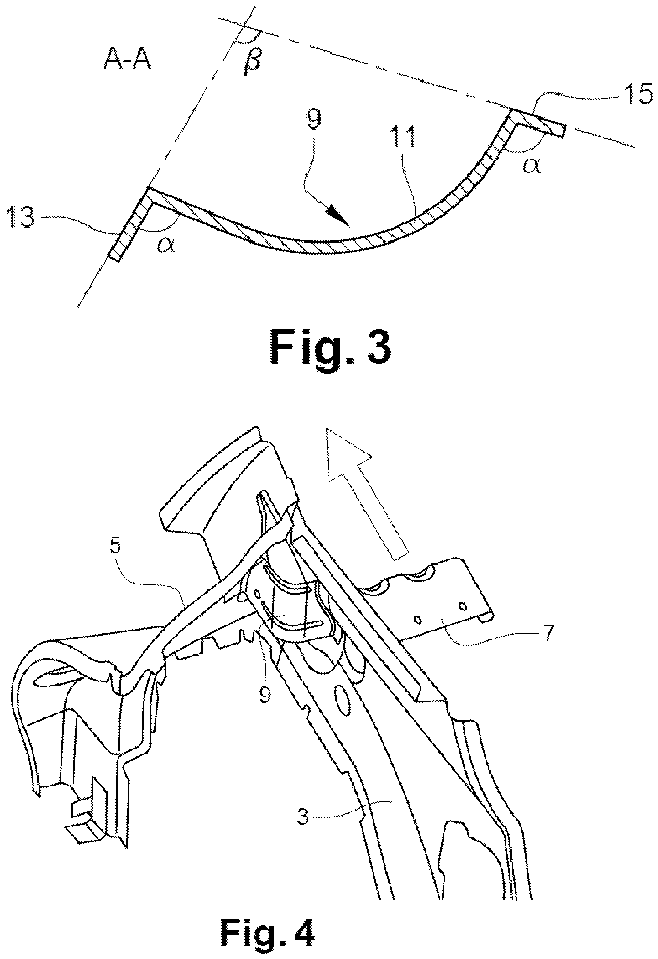

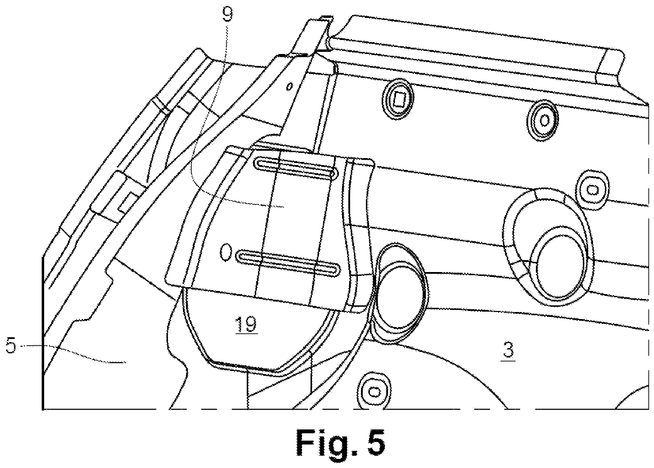

On se réfèrera en premier lieu à la figure 1 illustrant partiellement une structure de caisse d'un véhicule 1 selon l'invention telle que vue depuis l'intérieur dudit véhicule. Le véhicule 1 comprend une doublure de pied arrière 3, un passage de roue arrière 5 (représenté en figures 4 et 5), et au moins un support 7 de système de retenue fixé sur la face intérieure de la doublure de pied arrière 3. Dans l'exemple de réalisation représenté, le support 7 de système de retenue est une tablette de dossier 7 destinée à porter les enrouleurs de ceinture de sécurité. L'homme du métier peut néanmoins adapter l'invention à un renforcement de la doublure d'aile arrière au niveau du support de système de verrouillage de dossier de siège.

Selon l'invention, le véhicule 1 comprend en outre un renfort 9 montrant deux ailes latérales (13, 15) (visibles en figure 2). Le renfort 9 est fixé à la fois à la doublure de pied arrière 3 et au passage de roue arrière 5 au moyen de ses ailes latérales (13, 15). Le renfort 9 est préférentiellement fixé sur la face extérieure de la doublure de pied arrière 3. Selon l'invention, ledit renfort 9 est disposé sur la doublure de pied arrière 3 au moins en partie à la même hauteur que la tablette de dossier 7, la hauteur étant définie selon un axe vertical. Le support 7 de système de retenue (ici, une tablette de dossier 7) et le renfort 9 sont donc tous les deux fixés sur la doublure de pied arrière 3 au même niveau selon l'axe vertical, mais sur des faces différentes de ladite doublure 3.

Dans un mode de réalisation non représenté, le support de système de retenue et le renfort sont alignés selon l'axe transversal du véhicule. Néanmoins, selon l'exemple de réalisation illustré sur les figures, le support 7 de système de retenue et le renfort 9 ne sont pas alignés selon l'axe transversal mais montrent un décalage si bien que l'un est disposé en avant de l'autre selon l'axe longitudinal du véhicule. Ainsi, de préférence, le renfort 9 est fixé sur la doublure de pied arrière 3 sur une zone disposée en avant de la zone de fixation du support 7 de système de retenue (ici, la tablette de dossier 7) selon la direction longitudinale du véhicule 1. Le renfort 9 est fixé au moyen de ses ailes latérales et est agencé dans le véhicule de manière à ce qu'une de ses ailes latérales soit disposée en avant de l'autre. Il est ainsi défini alors une aile latérale avant 13 et une aile latérale arrière 15. Selon une caractéristique de l'invention, le renfort 9 est fixé au passage de roue arrière 5 par son aile latérale avant 13 et à la doublure de pied arrière 3 par son aile latérale arrière 15.

Un exemple de réalisation d'un renfort 9 selon l'invention est illustré en figure 2, il se présente préférentiellement sous forme d'une pièce en tôle emboutie, par exemple en acier, pliée de manière à ce que ses ailes latérales (13, 15) soient non-parallèles entre elles.

Selon une caractéristique de l'invention, au moins une aile latérale (13, 15) s'étend selon la direction verticale lorsque le renfort 9 est monté dans le véhicule, plus préférentiellement, les deux ailes latérales (13, 15) s'étendent selon la direction verticale.

Par exemple, comme illustré en figure 3, les ailes latérales avant 13 et arrière 15 s'étendent selon des directions différentes formant un angle β ayant une valeur comprise entre 60 et 120° tel que mesurée dans un plan horizontal, plus préférentiellement comprise entre 80 et 100°, encore plus préférentiellement de 90°. On aura compris qu'avantageusement le renfort 9 est non-plat. Cette configuration lui permet de se fixer sur des parois non-parallèles.

Le renfort 9 est préférentiellement fixé par soudage à la doublure de pied arrière 3 et au passage de roue arrière 5, mais d'autres moyens d'assemblage peuvent être envisagés par l'homme du métier, par exemple un assemblage par rivetage.

En effet, selon un mode de réalisation préféré de l'invention, le renfort 9 est fixé sur une partie dudit passage de roue arrière agencée pour s'étendre selon la direction transversale du véhicule comme illustré en figure 4. Lorsque le renfort 9 est fixé au passage de roue arrière 5 par son aile latérale avant, ladite aile avant s'étend selon l'axe transversal du véhicule, tandis que l'aile arrière, fixée sur la doublure de pied arrière 3, s'étend selon l'axe longitudinal du véhicule. Cette particularité de l'invention est intéressante en ce que l'effort subi par la doublure de pied arrière 3 en provenance des efforts de retenue du support 7 de système de retenue (ici la tablette de dossier 7) est donc déporté et transmis au passage de roue arrière par un appui dudit renfort 9 sur un élément qui s'étend transversalement par rapport à direction de la force considérée. Le renfort 9 va prendre appui sur le passage de roue arrière 5 au moyen de toute la surface de son aile latérale avant 13.

Selon un exemple de réalisation non-représenté, le renfort se présente sous une forme d'équerre de renfort. De manière préférentielle, le renfort présente un corps agencé entre les ailes latérales avant et arrière. Le renfort peut ainsi se présenter sous forme d'équerre de renfort à trois pans, le pan central formant le corps du renfort. Dans ce mode de réalisation le corps du renfort est plat.

Selon un mode de réalisation préféré, illustré notamment en figure 3, le renfort 9 présente en outre un corps 11 agencé entre les ailes latérales (13, 15) et ledit corps 11 s'étend entre les ailes latérales selon un profil arqué. La forme arquée du corps 11 du renfort 9 est avantageuse en ce qu'elle optimise la transmission des efforts.

De préférence, comme illustré en figure 3, chacune desdites ailes latérales avant 13 et arrière 15 s'étend selon une direction formant un angle α non-plat avec le corps 11 du renfort 9. La valeur de l'angle α entre l'aile latérale avant 13 et le corps 11 du renfort 9 peut être la même ou différente de la valeur de l'angle α entre l'aile latérale arrière 15 et le corps 11 du renfort 9. Par exemple, la valeur de l'angle α est comprise entre 60 et 120° telle que mesurée dans un plan horizontal lorsque le renfort 9 est fixé sur le véhicule, plus préférentiellement comprise entre 80 et 100°, encore plus préférentiellement de 90°.

Que le corps 11 du renfort soit plat ou arqué, il présente avantageusement au moins une nervure de rigidification 17 sur son corps 11 (visible en figure 2). De manière complémentaire ou alternative, que le renfort présente ou non un corps, il présente au moins une nervure de rigidification sur au moins une de ses ailes latérales. Que les nervures de rigidification soient présentes sur le corps et/ou sur les ailes latérales, elles sont préférentiellement orientées horizontalement.

Comme illustré en figure 5, la présence d'un corps 11 permet également au renfort 9 de contourner un ajour 19 présenté par la doublure de pied arrière 3. Ainsi, dans un mode de réalisation préférentiel illustré par exemple en figure 5, la doublure de pied arrière 3 présente un ajour 19 disposé en avant de la zone de fixation d'un support de système de retenue, par exemple d'une tablette de dossier, et ledit renfort 9 est fixé en bordure dudit ajour 19 de manière à ce que sa zone de fixation soit intercalée entre ledit ajour 19 et la zone de fixation du support de système de retenue selon la direction longitudinale du véhicule.

## Revendications

1. Véhicule (1) automobile comprenant une doublure de pied arrière (3) et un passage de roue arrière (5),au moins un support (7) de système de retenue fixé sur la doublure de pied arrière (3), et un renfort (9) montrant deux ailes latérales (13, 15), ledit renfort (9) étant fixé par ses ailes latérales (13, 15) à la doublure de pied arrière (3) et au passage de roue arrière (5) étant disposé sur la doublure de pied arrière (3) au moins en partie à la même hauteur que le ou un des supports (7) de système de retenue, le renfort (9) étant agencé dans le véhicule de manière à ce qu'une de ses ailes latérales (13, 15) soit disposée en avant de l'autre de sorte à définir une aile latérale avant (13) et une aile latérale arrière (15), ledit renfort (9) étant fixé au passage de roue arrière (5) par son aile latérale avant (13), **caractérisé en ce que** la doublure de pied arrière présente un ajour (19) en avant de la zone de fixation du support (7) de système de retenue sur la doublure de pied arrière (3) et **en ce que** ledit renfort (9) est fixé en bordure dudit ajour de manière à ce que sa zone de fixation soit intercalée entre ledit ajour (19) et la zone de fixation du support (7) de système de retenue selon la direction longitudinale du véhicule et l'aile latérale arrière est fixée sur la doublure de pied arrière (3).

2. Véhicule (1) selon la revendication 1, **caractérisé en ce que** le renfort (9) se présente sous forme d'un embouti plié de manière à ce que ses ailes latérales (13, 15) soient non-parallèles entre elles.

3. Véhicule (1) selon l'une des revendications 1 ou 2 **caractérisé en ce que** le renfort (9) présente en outre un corps (11) agencé entre les ailes latérales (13, 15) et **en ce que** ledit corps (11) s'étend entre les ailes latérales selon un profil arqué.

4. Véhicule (1) selon l'une des revendications 1 ou 2 **caractérisé en ce que** le renfort (9) présente en outre un corps (11) agencé entre les ailes latérales (13, 15) et se présente sous forme d'équerre à trois pans.

5. Véhicule (1) selon l'une des revendications 1 à 4, **caractérisé en ce que** le renfort (9) est fixé sur la doublure de pied arrière (3) sur une zone disposée en avant de la zone de fixation du support (7) de système de retenue selon la direction longitudinale du véhicule.

6. Véhicule (1) selon l'une des revendications 1 à 5, **caractérisé en ce que** le renfort (9) présente au moins une nervure de rigidification (17) sur au moins une de ses ailes latérales (13, 15) et/ou sur son corps (11), lorsque le renfort (9) présente en outre un corps (11) agencé entre les ailes latérales (13, 15).

7. Véhicule (1) selon l'une des revendications 1 à 6, **caractérisé en ce que** le renfort (9) est en acier et est assemblé par soudage.

## Patentansprüche

1. Kraftfahrzeug (1) mit einer Hinterfußauskleidung (3) und einem Hinterraddurchgang (5), mindestens einem an der Hinterfußauskleidung (3) befestigten Haltesystemträger (7) und einer Verstärkung (9), die zwei Seitenflügel (13, 15) aufweist, wobei die Verstärkung (9) mit ihren Seitenflügeln (13, 15) an der Hinterfußauskleidung (3) befestigt ist und der Hinterraddurchgang (5) an der Hinterfußauskleidung (3) zumindest teilweise in derselben Höhe wie oder angeordnet ist Eine der Halterungen (7) für ein Rückhaltesystem, wobei die Verstärkung (9) im Fahrzeug so angeordnet ist, dass einer ihrer Seitenflügel (13, 15) vor dem anderen angeordnet ist, um einen vorderen Seitenflügel (13) und einen hinteren Seitenflügel (15) zu definieren, wobei die Verstärkung (9) mit ihrem vorderen Seitenflügel (13) am hinteren Radkanal (5) befestigt ist, **dadurch gekennzeichnet, dass** die hintere Fußauskleidung vor dem Befestigungsbereich der Halterung (7) an der hinteren Fußauskleidung eine Öffnung (19) aufweist (3) und **dadurch gekennzeichnet, dass** die Verstärkung (9) am Rand der Durchbrechung derart befestigt ist, dass ihr Befestigungsbereich zwischen der Durchbrechung (19) und dem Befestigungsbereich des Halters (7) des Rückhaltesystems in Längsrichtung des Fahrzeugs angeordnet ist und dass der hintere Seitenschenkel an der hinteren Fußauskleidung (3) befestigt ist.

2. Fahrzeug (1) nach Anspruch 1, **dadurch gekennzeichnet, dass** die Verstärkung (9) in Form einer Ausstanzung ausgebildet ist, die derart gebogen ist, dass ihre Seitenflügel (13, 15) nicht parallel zueinander sind.

3. Fahrzeug (1) nach einem der Ansprüche 1 oder 2, **dadurch gekennzeichnet, dass** die Verstärkung (9) außerdem einen Körper (11) aufweist, der zwischen den Seitenflügeln (13, 15) angeordnet ist, und dass sich der Körper (11) zwischen den Seitenflügeln in einem bogenförmigen Profil erstreckt.

4. Fahrzeug (1) nach einem der Ansprüche 1 oder 2, **dadurch gekennzeichnet, dass** die Verstärkung (9) außerdem einen Körper (11) aufweist, der zwischen den Seitenflügeln (13, 15) angeordnet ist und in Form eines Dreikantwinkels vorliegt.

5. Fahrzeug (1) nach einem der Ansprüche 1 bis 4, **dadurch gekennzeichnet, dass** die Verstärkung (9) an der hinteren Fußauskleidung (3) an einem Bereich befestigt ist, der in Fahrzeuglängsrichtung vor dem Befestigungsbereich des Haltesystemträgers (7) angeordnet ist.

6. Fahrzeug (1) nach einem der Ansprüche 1 bis 5, **dadurch gekennzeichnet, dass** die Verstärkung (9) an mindestens einem ihrer Seitenschenkel (13, 15) und/oder an ihrem Körper (11) mindestens eine Versteifungsrippe (17) aufweist, wenn Die Verstärkung (9) weist ferner einen zwischen den Seitenschenkeln (13, 15) angeordneten Körper (11) auf.

7. Fahrzeug (1) nach einem der Ansprüche 1 bis 6, **dadurch gekennzeichnet, dass** Die Verstärkung (9) besteht aus Stahl und ist durch Schweißen verbunden.

## Claims

1. Motor vehicle (1) comprising a rear foot lining (3) and a rear wheel arch (5), at least one retaining system support (7) fixed to the rear foot lining (3), and a reinforcement (9) showing two lateral wings (13, 15), the said reinforcement (9) being fixed by its lateral wings (13, 15) to the rear foot lining (3) and to the rear wheel arch (5) being arranged on the rear foot lining (3) at least in part at the same height as the or one of the supports (7) a retaining system, the reinforcement (9) being arranged in the vehicle so that one of its lateral wings (13, 15) is arranged in front of the other so as to define a front lateral wing (13) and a rear lateral wing (15), said reinforcement (9) being fixed to the rear wheel arch (5) by its front lateral wing (13), wherein the rear foot lining has an opening (19) in front of the zone for fixing the retaining system support (7) to the rear foot lining (3) and in front of the rear foot lining said reinforcement (9) is fixed at the edge of said opening so that its fixing zone is inserted between said opening (19) and the fixing zone of the retaining system support (7) along the longitudinal management of the vehicle and the rear lateral wing is fixed on the rear foot lining (3).

2. Vehicle (1) according to claim 1, **characterised in that** the reinforcement (9) is in the form of a stamped portion folded so that its lateral wings (13, 15) are not parallel to one another.

3. Vehicle (1) according to either of Claims 1 and 2, **characterised in that** the reinforcement (9) also has a body (11) arranged between the lateral wings (13, 15) and **in that** the said body (11) extends between the lateral wings in an arched profile.

4. Vehicle (1) according to either of Claims 1 and 2, **characterised in that** the reinforcement (9) also has a body (11) arranged between the lateral wings (13, 15) and is in the form of a three-sided bracket.

5. Vehicle (1) according to one of Claims 1 to 4, **characterised in that** the reinforcement (9) is fixed to the rear foot lining (3) on a zone arranged in front of the zone for fixing the support (7) of the restraint system according to the longitudinal management of the vehicle.

6. Vehicle (1) according to one of Claims 1 to 5, **characterised in that** the reinforcement (9) has at least one stiffening rib (17) on at least one of its lateral wings (13, 15) and/or on its body (11), when the reinforcement (9) also has a body (11) arranged between the lateral wings (13, 15).

7. Vehicle (1) according to one of Claims 1 to 6, **characterized in that** the reinforcement (9) is made of steel and is assembled by welding.
